# DEMANDE DE BREVET EUROPEEN

(11) **EP 1 132 636 A1**
(43) Date de publication de la demande: **12.09.2001**
(21) Numéro de dépôt: 01400616.7
(22) Date de dépôt: 09.03.2001
(51) Int. Cl.: F16D 1/072, F16D 1/10

(54) **Dispositif pour l'immobilisation en rotation d'un axe dans un support**

(30) Priorité: 09.03.2000 FR 0003007
(71) Demandeur: P.S.M. Fixation, 49240 Avrillé (FR)
(72) Inventeur: Guinois, Gérard, 49240 Avrillé (FR)
(74) Mandataire: Hud, Robert

(57) **Abrégé**

L'axe 1 comporte une cannelure 2 orientée longitudinalement. L'axe 1 est engagé dans l'alésage 3 du carter 4 formant support, la cannelure 1 est disposée en regard d'une rainure 5 de l'alésage 3. Le renflement créé par la déformation de la périphérie de l'axe 1, lors de la formation de la cannelure 2, se trouve engagé dans la rainure 5 en empêchant toute rotation de l'axe 1 dans l'alésage 3 du carter 4.

L'invention s'applique en particulier à l'immobilisation de l'axe recevant le pignon fou de la marche arrière d'une boîte de vitesse automobile.

## Description

La présente invention concerne l'immobilisation en rotation d'un axe dans un support, en particulier l'immobilisation en rotation dans un alésage du carter d'une boîte de vitesse d'un axe recevant le pignon fou de marche arrière.

Dans diverses applications mécaniques il est connu de prévoir, régulièrement réparties sur la circonférence d'une pièce mécanique de révolution, des rainures longitudinales ou cannelures qui permettent de réaliser un accouplement avec une pièce complémentaire munie de cannelures correspondantes. De manière générale, il est prévu trois cannelures disposées à 120°.

La société déposante à imaginé, de façon inattendue, d'utiliser le renflement créé par la déformation à froid de la périphérie d'un axe à section circulaire, lors de la réalisation d'une cannelure, pour assurer l'immobilisation en rotation de cet axe disposé dans un support muni d'une rainure.

Par le document US-A-1 397 848, on connaît un procédé de fixation d'un disque sur un arbre pour la fabrication d'articles tels que des jouets. Ce procédé consiste à déformer la section droite du fil en créant des nervures, et à fixer par emboutissage le disque sur les nervures. Ce document n'a donc pas le même objet que la présente invention, laquelle est relative à la fixation, dans un support tel qu'un carter de boîte de vitesse, d'un axe sur lequel est monté fou un pignon de marche arrière.

Selon l'invention, le dispositif pour assurer l'immobilisation en rotation, dans un alésage, ménagé dans le carter d'un boîte de vitesse automobile, d'un axe recevant le pignon fou de marche arrière, se caractérise en ce qu'il comprend au moins une cannelure pratiquée dans la périphérie de l'axe, dans la direction longitudinale de celui-ci, ladite cannelure venant en regard d'une rainure du dit alésage, de façon que le renflement créé par déformation de la périphérie de l'axe lors de la formation de la cannelure soit engagé dans ladite rainure en interdisant la rotation de l'axe.

Pour bien faire comprendre l'invention, on en décrira ci-après, à titre d'exemple sans caractère limitatif, une forme de réalisation préférée en référence au dessin schématique annexé dans lequel :
la figure 1 est une vue en élévation d'un axe selon l'invention utilisable pour porter le pignon fou de marche arrière d'une boîte de vitesse automobile ;
la figure 2 est une coupe verticale transversale prise selon la ligne II - II de la figure 1 ; et
la figure 3 est une vue en coupe horizontale montrant l'axe des figures 1 et 2 immobilisé en rotation dans un alésage du carter d'une boîte de vitesse.

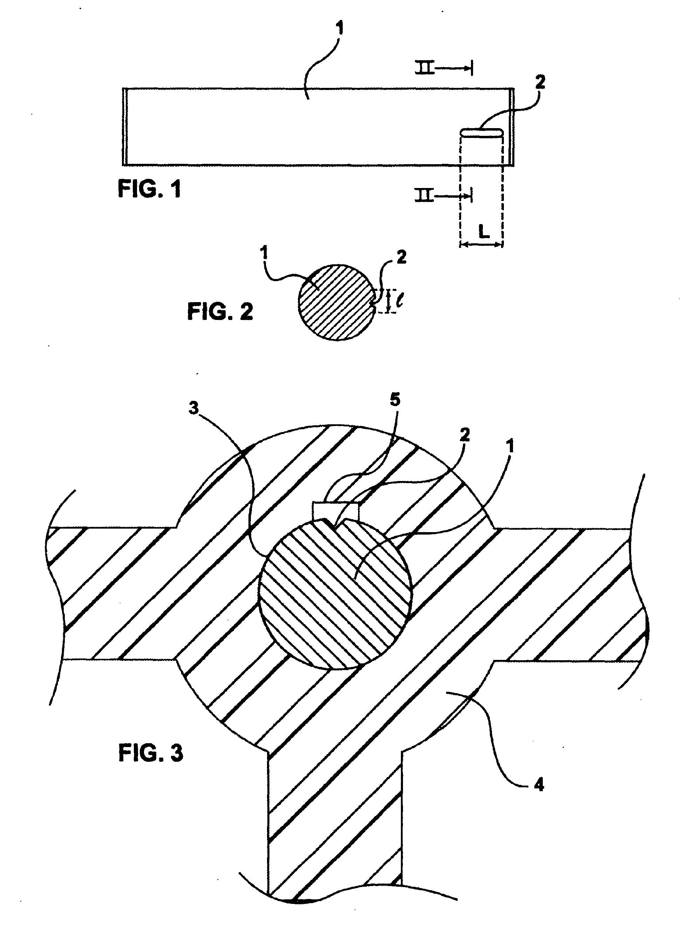

En référence aux figures 1 et 2 on a désigné en 1 un axe à section circulaire destiné à être mis en place dans le carter d'une boîte de vitesse automobile et à recevoir le pignon fou de marche arrière (non représenté) de la boîte de vitesse.

Sur la périphérie de l'axe 1, et dans la direction longitudinale de celui-ci, est pratiquée une cannelure 2 de longueur L. La cannelure 2 ainsi pratiquée crée, par la déformation à froid un renflement de largeur l (voir figure 2) qui s'étend de part et d'autre de la cannelure 2.

A la figure 3 on a représenté la mise en situation de l'axe 1 dans un alésage 3 à section circulaire du carter 4 de la boîte de vitesse. L'alésage 3 présente une rainure 5 dont la largeur correspond à la largeur 1 du renflement de l'axe 1. Un certain jeu étant ménagé entre le diamètre intérieur de l'alésage 3 et le diamètre extérieur de l'axe 1, on introduit verticalement l'axe 1 dans l'alésage 3. Lors de cette introduction, le renflement entourant la cannelure 2 vient dans la rainure 5, en empêchant ainsi l'axe 1 de tourner de façon à éviter l'usure de l'alésage 3.

Sur l'axe 1 ainsi immobilisé, on monte avec jeu un pignon de marche arrière (non représenté) qui pourra tourner fou autour de l'axe 1 immobile.

On comprendra que la description ci-dessus a été donnée à simple titre d'exemple, sans caractère limitatif, et que des adjonctions ou des modifications constructives pourraient lui être apportées sans sortir du cadre de la présente invention.

## Revendications

1. Dispositif pour assurer l'immobilisation en rotation d'un axe (1) dans un alésage (3) ménagé dans un support (4), **caractérisé en ce qu'**il comprend au moins une cannelure (2) pratiquée dans la périphérie de l'axe (1), dans la direction longitudinale de celui-ci, ladite cannelure (2) venant en regard d'une rainure (5) du dit alésage (3) de façon que le renflement créé par déformation de la périphérie de l'axe (1) lors de la formation de la cannelure (2) soit engagé et immobilisé en rotation dans ladite rainure (5).
